(19) Europäisches Patentamt
European Patent Office
Office européen des brevets

(11) **EP 4 761 092 A1**

(12) **EUROPEAN PATENT APPLICATION**

(43) Date of publication:
**17.06.2026 Bulletin 2026/25**

(21) Application number: **25217794.4**

(22) Date of filing: **21.11.2025**

(51) International Patent Classification (IPC):
*H02M 7/483* (2007.01)    *H02M 1/12* (2006.01)
*H02M 1/10* (2006.01)    *H02M 1/00* (2006.01)

(52) Cooperative Patent Classification (CPC):
H02M 7/483; H02M 1/007; H02M 1/0087;
H02M 1/10; H02M 1/12; H02M 7/4835

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **10.12.2024 IT 202400028107**

(71) Applicant: **Possa, Andrea**
**28845 Domodossola (IT)**

(72) Inventor: **Possa, Andrea**
**28845 Domodossola (IT)**

(74) Representative: **Emmi, Mario**
**Studio Brevetti Turini Srl**
**Viale Matteotti, 25**
**50121 Firenze (FI) (IT)**

(54) **A CONTROL SYSTEM FOR INCREASE OF POWER QUALITY OF A CURRENT SOURCE MULTILEVEL CONVERTER**

(57) The present invention relates to an innovative three-phase multi-level converter composed of at least two sub-modules in parallel capable of reducing harmonics even in the event of working conditions below the nominal power value.

FIG. 2

EP 4 761 092 A1

## Description

### Scope of the invention

The present invention relates to the technical field relating to current source multilevel converters.

In particular, the invention refers to an innovative current source multilevel converter, and its operating mode, capable of optimizing the quality of the power supplied even when the power used by the latter, i.e. exchanged with the outside, is reduced compared to its nominal power.

### A brief outline of the prior art

Electronic power converters are devices used in various fields of industry. These are able to convert electrical energy from direct current (DC) to alternating current (AC) and vice versa. In particular, there are two main categories of converters:

- Voltage source converters (VSCs);
- Current source converters (CSCs).

VSCs are generally the most common and are characterized by a DC side voltage source generally obtained through an electrolytic capacitor.

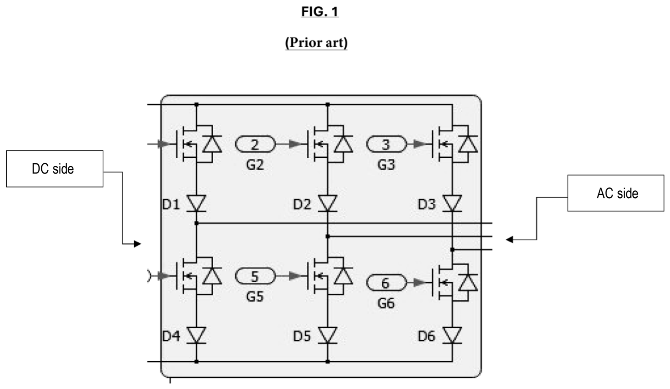

The CSCs are then known, as per Figure 1. In particular, Figure 1, per se known art, actually shows the type of a sub-module of a converter per se known. The CSC converters are devices whose main characteristics are the presence of a DC side current source that is generally obtained from an inductor or other device.

On the AC side there is a capacitor filter that eliminates the high-frequency components of the currents.

The CSCs can therefore be devices composed of a single module (i.e. a single block composed of semiconductor devices) as in Figure 1 of known art together with the DC side current source and the AC side capacitive filter.

Finally, the current multilevel converters (MCSCs) are known which, unlike CSCs, use a minimum number of two modules but can also use a larger number.

The MCSCs are distinguished from CSCs by the presence of a greater number of current levels generated in the AC side current waveform. They allow a reduction in the switching frequency of the switches and allow an improvement in total harmonic distortion (THD) to be obtained, which is one of the major evaluation parameters of power quality.

However, a technical problem with the known technology described is that, at the present state of the art, there is a low quality in the power supplied by a current source multilevel converter (MCSC) when the power used by it, i.e. circulating inside it, is reduced compared to its nominal power.

More in particular, the main parameters to define a good electronic power converter are basically two:

Yield;
Power quality.

The yield is a parameter that basically indicates the ratio between the outlet power $P_{out}$ and the inlet power $P_{in}$ of the converter.

$$\eta = \frac{P_{out}}{P_{in}}$$

In the construction of an electronic power converter, the objective is to maintain an outlet power that is as much as possible equal to the inlet power, i.e. to obtain losses as small as possible and therefore a high yield.

As for the "power quality", this indicates how much the power in outlet from the converter, and therefore the voltage and current signals, are free from the possible presence of harmonics produced by the converter. A (voltage or current) signal can be broken down into several components. The fundamental component is the only signal that one would like to obtain in outlet from the converter even if, in reality, its harmonics are also emitted, which are generally in a frequency multiple to the fundamental one. These harmonics are disturbances that, when placed on the grid, in addition to causing losses, could potentially damage grid-connected equipment. Consequently, a good power quality indicates a reduced presence of harmonics within the signal.

The objective in the construction of each converter is therefore to reduce these harmonics as much as possible. The quantity of harmonics introduced into the grid is also defined by the standards and should not exceed a maximum recommended value.

In the study of the converters, these will have a harmonic distortion that is reduced when they work around their nominal power. This is no longer true when the power supplied by the converter is reduced. In fact, it is possible to predict a correlation between the decrease in the power circulating inside the converter and the increase in harmonic distortion (THD).

This problem is of particular interest for all those applications that require the converter to work at a reduced power compared to the nominal power.

These could include, by way of example, systems for the production of electrical energy from renewable sources, such as photovoltaic and wind power, which by nature of the primary energy source will not necessarily produce the nominal power for which the converters have been sized.

### Summary of the invention

The need is therefore felt for a technical solution that solves, at least in part, the aforesaid technical problems.

In particular, the object of the present invention is to provide a technical solution that allows to obtain an improvement of the power quality of the converter (therefore a substantial reduction of the unwanted harmonics) even in case of reduced power ranges with respect to the nominal power, at the same time keeping a yield similar to the classic control case already present in the literature.

These and other objects are achieved with a current source multilevel electric converter, preferably with an impressed current source, in accordance with claim 1.

This converter comprises:

At least two sub-modules;

In accordance with the invention there are therefore at least a first sub-module and at least a second sub-module.

In accordance with the invention, a control configured to perform a power exchange between said at least two sub-modules is now comprised.

In this way, advantageously a quantity of power supplied by a sub-module is absorbed by the other sub-module.

Preferably, but not necessarily, said power may be a reactive power.

This converter, therefore provided with such control in accordance with claim 1, solves all the aforesaid technical problems allowing to obtain an improvement of the power quality, hence a reduction of unwanted harmonics even in case of powers below the nominal value.

In particular, in order to control the power supplied by the converter, a modulation index $m_a$ is in fact taken as a reference for the control. This parameter is defined as the sum of the direct axis current $i_{gd,ref}$ and the reference quadrature axis current $i_{gq,ref}$, normalized at the nominal current, which are directly connected to the active and quadrature power as shown below.

Consequently, with the same modulation index that must remain very close to the unit value, in the event of a decrease in the power exchanged with the outside, the control will compensate for the power passing in the sub-modules through this reactive power exchange.

Thanks to this solution, it will also be possible, with the same power quality obtained in outlet, to use a capacitive filter of reduced capacity and size, thus allowing a reduction in costs.

Advantageously, in accordance with said solution, the power required by the grid and exchanged with said grid, remains unchanged.

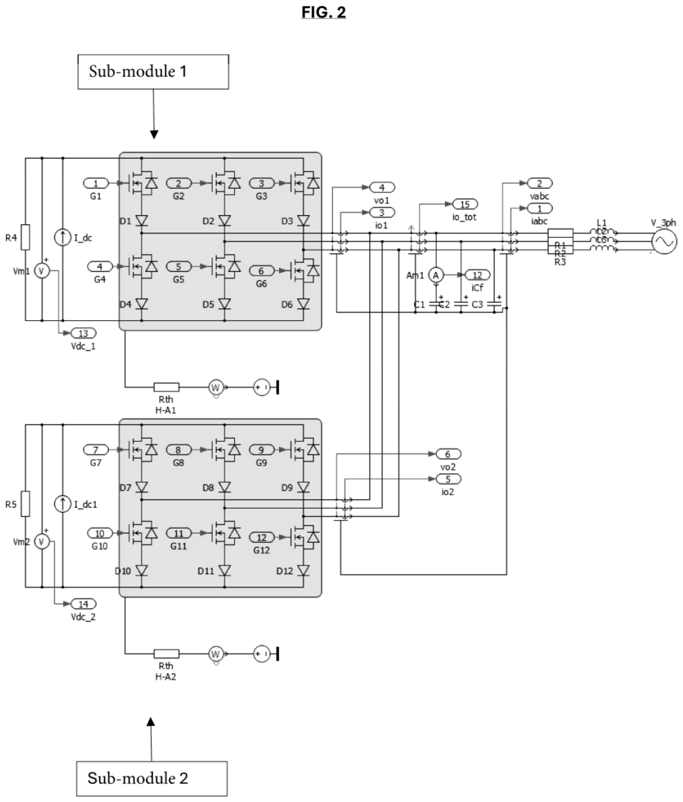

Advantageously, therefore, the power exchange can take place through the junction node of the two converters upstream of the capacitor bank, therefore before the measurement point of "Io_tot" shown in Figure 2.

Advantageously, in this way, the exchange takes place exclusively between the two sub-modules excluding the parts external to the converter.

Advantageously, said at least two sub-modules (i.e. the at least one first sub-module and the at least one second sub-module) may be placed in parallel to each other.

Advantageously, each sub-module can be powered by its own independent current source.

Advantageously, said control is a control of the modulation index.

Advantageously, it is programmed to consider as a reference a modulation index defined as the sum of the direct axis current $i_{gd,ref}$ and the reference quadrature axis current $i_{gq,ref}$, normalized at the nominal current in accordance with the following formulation:

$$m_a = \frac{\sqrt{i_{gd,ref}^2 + i_{gq,ref}^2}}{I_{dc}}$$

Advantageously, the control of the modulation index is arranged to receive a reference modulation index in inlet, which is the modulation index which one wishes to obtain, and the present modulation index, i.e. the real one.

In this way, advantageously, the control of the modulation index provides the reactive current "$i_{q,ref}$" in outlet which is used as positive for a sub-module, which will supply a power (e.g. reactive power), and negative for the other sub-module which will consequently absorb a power (e.g. reactive power).

Advantageously, there may be a control PI(z) which is programmed to take in inlet the difference of the modulation index between the reference one and the present one in order to provide the reactive current required to obtain the reference modulation index at the present power exchanged with the outside.

Advantageously, for each sub-module one or more MOSFET devices may be comprised in series with one or more diodes.

In this way, advantageously, the inverted tensions are blocked.

Advantageously, downstream of the connection node of said at least two sub-modules, a capacitive filter can be connected, for example three-phase one, adapted to eliminate the high-frequency components of currents.

Advantageously, the converter can be three-phase.

A further object of the present invention is a method for obtaining a reduction of unwanted harmonics in a current converter when it is operating in a reduced power range with respect to the nominal power.

In accordance with said method, this comprises the step of arranging at least two sub-modules in the converter and a subsequent step of power exchange between said at least two sub-modules in such a way that a quantity of power supplied by a sub-module is absorbed by the other sub-module.

Advantageously, in this way, it can be obtained that the power exchanged with the grid, which will be the power required by it, will remain unchanged.

Advantageously, therefore, the power exchange can take place through a junction node of the two converters upstream of the capacitor bank, therefore before the measurement point of "Io_tot" shown in Figure 2.

Advantageously, in this way, the exchange takes place exclusively between the two sub-modules excluding the parts external to the converter.

Advantageously, said at least two sub-modules can be placed in parallel to each other.

Advantageously, each sub-module can be powered by its own independent current source.

Advantageously, in order to control the power supplied by the converter, the modulation index $m_a$ is taken as a reference defined as the sum of the direct axis current $i_{gd,ref}$ and the reference quadrature axis current $i_{gq,ref}$, normalized at the nominal current in accordance with this formula:

$$m_a = \frac{\sqrt{i_{gd,ref}^2 + i_{gq,ref}^2}}{I_{dc}}$$

Advantageously, in this way, with the same modulation index that must remain close to or equal to the unit value, in the event of a decrease in the power supplied, the control compensates for the power passing in the sub-modules through a reactive power exchange.

Advantageously, said control may be a control of the modulation index" which receives in inlet a reference modulation index, which is the modulation index which one wants to obtain, and a present modulation index, said control providing in outlet the reactive current "$i_{q,ref}$" which is used as positive for a sub-module, which will supply a reactive power, and negative for the other sub-module which will consequently absorb a reactive power.

Brief description of the drawings

The invention, in one or more of its embodiments, will be detailed below in accordance with the following drawings:

- Figure 1 shows a known solution of CSC converter module;
- Figure 2 shows a converter solution of the invention in accordance with the invention, with each signal measurement point;
- Figure 3 shows a general overview of the control in accordance with the invention, wherein each sub-module has its own dedicated control;
- Figure 3A shows a general overview of the traditional control with independent control of the sub-modules;
- Figure 4 shows the transformation of the currents measured in the sub-module in the direct axis and quadrature components;
- Figure 5 shows the inside of the control block of the modulation index;
- Figure 6 shows the control for activating and deactivating the control;
- Figure 7 shows the results that this control led to a THD (acronym for "total harmonic distortion") compared to the traditional control; in particular, the figure on the left shows the traditional control for 10% of An while the figure on the right shows the proposed control for 10% of An;
- Figure 8 on the left shows the case of the traditional control currents for 10% of An while on the right it shows the control currents for 10% of An in accordance with the invention;
- Figure 9 shows a control yield in accordance with the known art at 10% of An;
- Figure 10 shows the control yield in accordance with the invention at 10% of An;
- Figure 11 shows a case of THD in case of traditional control for 30% of An while Figure 12 shows a case of control THD in accordance with the invention for 30% of An;
- Figure 13 shows a case of traditional control THD for 83% of An while Figure 14 shows the case of a control THD in accordance with the invention for 83% of An;
- Figure 15 is a table of values used for experimentation;
- Finally, Figure 16 shows for clarity a block diagram of a PLL.

Detailed description of some configurations of Invention

It is therefore an object of the invention a current source multilevel converter comprising:
At least two sub-modules;
and wherein a control configured to perform a power exchange between said at least two sub-modules is comprised in such a way that a quantity of power supplied by a sub-module is absorbed by the other sub-module.

An object of the invention is also a method for obtaining a reduction of unwanted harmonics in a current converter when it is operating in power ranges reduced with respect to the nominal power, the method comprising arrangement in the converter of at least two sub-modules, the method comprising a step of power exchange between said at least two sub-modules in such a way that a quantity of power supplied by said at least a sub-module is absorbed by the other sub-module or vice versa.

In all the aforesaid cases, the converter in question therefore exploits an innovative control that allows an improvement in Power Quality by exploiting a wanted exchange of reactive power between the sub-modules of said converter, without ever affecting the environment external to the device as a whole. More in particular, a sub-module supplies a certain reactive power and the other absorbs this quantity supplied by the first one. These two sub-modules, therefore, exchange with each other directly (for example as if one were the generator and the other the reactive power load).

This exchange of reactive power leads the individual sub-modules to supply an overall (active plus reactive) greater power tending to the nominal value compared to a standard operation and therefore to improve their Power Quality but without varying the power exchange with the outside.

Going into more detail of the invention, the present invention therefore aims to propose a current source multilevel converter that solves the problem of the low quality of the power supplied when the power used by the latter, i.e. exchanged with the outside, is reduced compared to its nominal power.

Therefore, it is an object of the invention to propose a control capable of increasing the quality of the power supplied, for example to the electricity grid or to any other user (i.e. the so-called power quality), in these reduced power ranges.

In accordance with the invention, therefore, the converter adopted for the study of the proposed control is a three-phase current source multilevel converter. It consists of two sub-modules placed in parallel with each other, with each sub-module powered by its own independent current source. Each sub-module of the adopted converter will use MOSFET devices suitably sized in series with diodes capable of blocking the inverted tensions also suitably sized. More specifically, the MOSFET devices are those where the gate signals G1,G2,G3...up to G12 enter, i.e. those above the diodes.

Downstream of the connection node of the two sub-modules, a three-phase capacitive filter will be connected, adapted to eliminate the high-frequency components of currents.

Before going into more detail about the proposed control, it is advisable to explain all the parts that make up a control of traditional type applied to this converter.

It is important to point out that the currents measured and used as inlet of the control have been acquired upstream of the connection node, that is, each sub-module for its own control uses its own current. The voltage adopted within the control is measured at the connection node of the converter with the grid, the so-called "point of common coupling" (PCC). Consequently, each sub-module will be controlled with its own current.

Figure 2 shows the converter with each signal measurement point. In short, a quick explanation of the most important measurements. The outlet "vabc" measures the triad of voltages at PCC necessary for determining the "theta" angle in outlet from the "PLL" explained below. The outlet "io1" measures the triad of currents of the first sub-module necessary for the control thereof. The outlet "io2" measures the triad of currents of the second sub-module necessary for its control. The outlet "io_tot" measures the total current of the converter, the sum of the currents of the two sub-modules before the capacitive filter. The outlet "iabc" measures the triad of currents at PCC downstream of the capacitive filter.

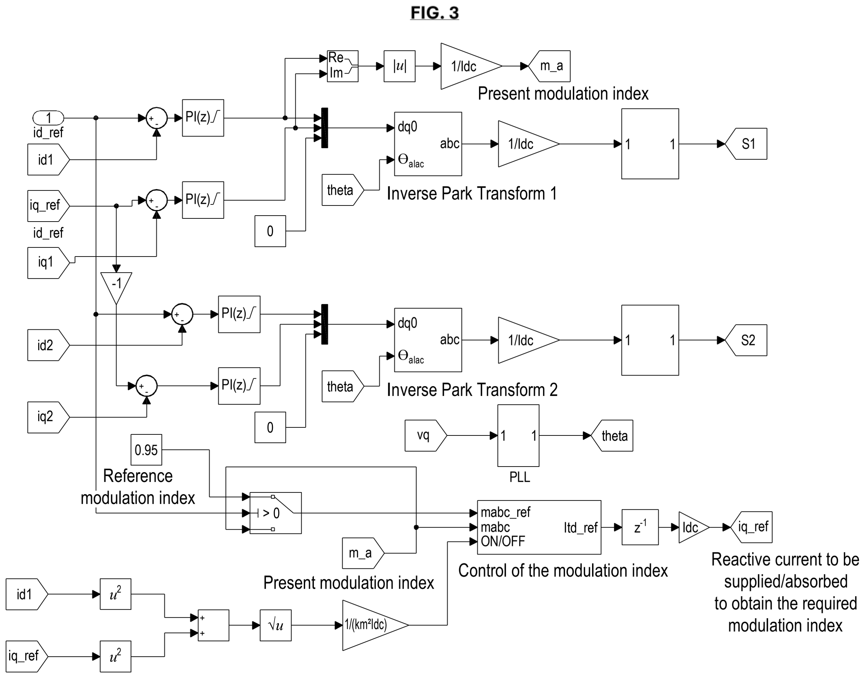

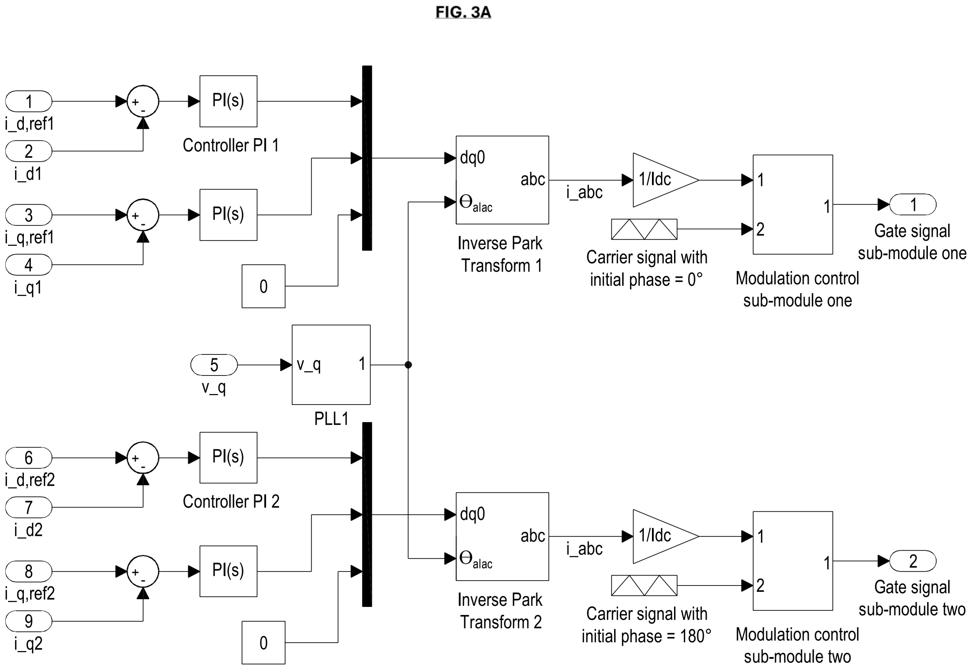

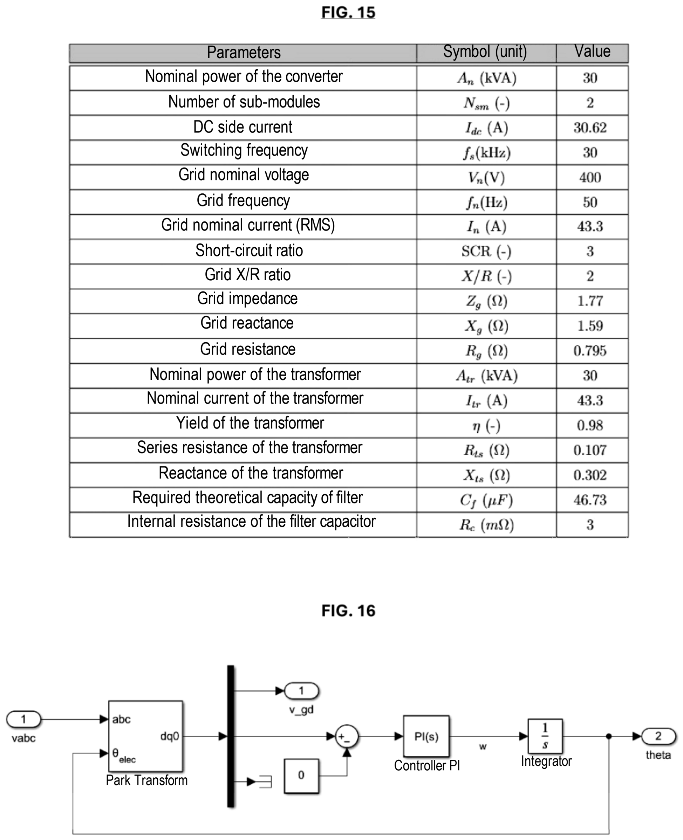

Figure 3 shows the adopted control in which each sub-module has its own dedicated control. In the control of a converter, in order to allow a more stable operation of the integral proportional controllers "PI(s)" the measured variables, i.e. the current and voltage, are changed in the reference passing from a reference in the time domain to a reference on rotating axes called as direct axis "d-axis" and quadrature axis "q-axis" through the use of the Park transform. In addition, the speed of these rotating axes is synchronized with the angular speed of the grid on which this converter is connected through the use of the control called in the literature "Phase Locked Loop" (PLL), present in the diagram by the name "PLL1" which will provide in outlet the "theta" angle used to carry out all the Park transforms and inverse transforms. Figure 16 further shows a block diagram of a PLL. This allows to set the quadrature axis tension:

$$v_{gq} = 0V$$

In this way it is possible to directly control the active power $P_g$ and the reactive power $Q_g$ supplied, directly by controlling the direct axis $i_{gd}$ and quadrature axis $i_{gq}$ current.

$$P_g = \frac{3}{2}(v_{gd}i_{gd} + v_{gq}i_{gq})$$

$$Q_g = \frac{3}{2}(v_{gq}i_{gd} - v_{gd}i_{gq})$$

If we take into account the quadrature axis of the current that is set to zero we obtain:

$$P_g = \frac{3}{2}v_{gd}i_{gd}$$

$$Q_g = -\frac{3}{2}v_{gd}i_{gq}$$

Returning to the control in Figure 3A, it is clear that the two controllers "PI(s)" of the first sub-module will take care of controlling the direct axis current and the quadrature axis current that will control respectively the active power and the reactive power supplied by the first sub-module. The same applies to the second sub-module.

The "inverse Park transform" will transform the components "dq0" into the triad of reference currents that will be used within the modulation control.

The block of the modulation control contains a classic control defined in the literature with the name of "Phase-shift-carrier sinusoidal pulse width modulation" applied and adapted in this case for the MCSC.

At the outlet we obtain the signals to be transferred to the gates of the passive switches.

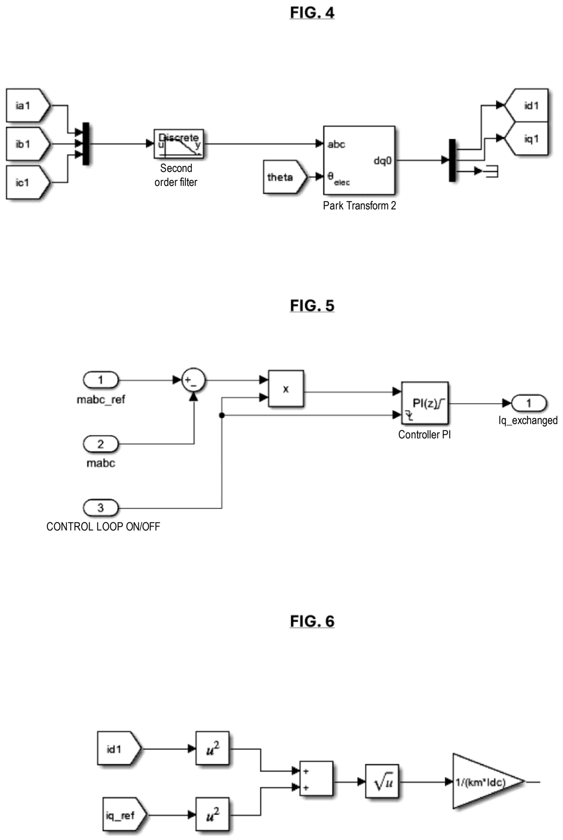

For completeness, Figure 4 shows the transformation of the currents measured in a sub-module into the direct axis and quadrature components.

The same transformation also occurs for the currents of the other sub-module and for the voltages measured at the PCC.

Until now, the traditional type control already known in the literature has been pointed out, used as a comparison for the simulations carried out.

Given that the THD of the converter, as mentioned above, is lower for an operation around the nominal power, the proposed control aims to maintain the power circulating in the converter at sufficiently high levels for each operating range.

To do this, the control performs an exchange of reactive power between the two sub-modules. This reactive power will be supplied by a sub-module and the same quantity will be absorbed by the second one. In this way, the power exchanged with the grid, which will be the power required by it, will remain unchanged.

In order to control the power supplied by the converter, the modulation index $m_a$ is taken as a reference for the control. This parameter is defined as the sum of the direct axis current $i_{gd,ref}$ and the reference quadrature axis current $i_{gq,ref}$, normalized at the nominal current, which, as seen, are directly connected to the active and quadrature power.

$$m_a = \frac{\sqrt{i_{gd,ref}^2 + i_{gq,ref}^2}}{I_{dc}}$$

Consequently, with the same modulation index that must remain very close to the unit value, in the event of a decrease in the power supplied, the control will compensate for the power passing in the sub-modules through this reactive power exchange.

Figure 3 shows the adopted control, which will include in its inside the proposed control part.

In the control it is possible to notice the blocks already previously explained in the traditional control. However, in its inside there will be a control named "control of the modulation index", which will receive in inlet the reference modulation index, which is the modulation index we want to obtain, and the present modulation index that is calculated with the outlets of the controllers "PI(z) as in the figure. The control in question will provide in outlet the reactive current $"i_{q,ref}"$ which will be used as positive for the first sub-module, which will supply a reactive power, and negative for the second one which will consequently absorb a reactive power for the adopted convention. In the cases described herein and simulated, the reactive current is supplied by the first sub-module and absorbed by the second one, but it is obvious that it would also be possible to do the opposite or vice versa.

"S1" and "S2" indicate the logical signals to be sent to own semiconductor switches to obtain their switching.

Entering specifically within the block "control of the modulation index", in Figure 5 there is a control PI(z) which, as mentioned, takes in inlet the difference in the modulation index between the reference one and the present one and provides the reactive current required to obtain the reference modulation index at the present power exchanged with the grid.

The series of blocks at the bottom left in Figure 3 and highlighted in Figure 6 performs the task of deactivating the "control of the modulation index" when the modulation index is already sufficiently high due to the exchange of power with the grid close to the nominal power.

**OBTAINED RESULTS:**

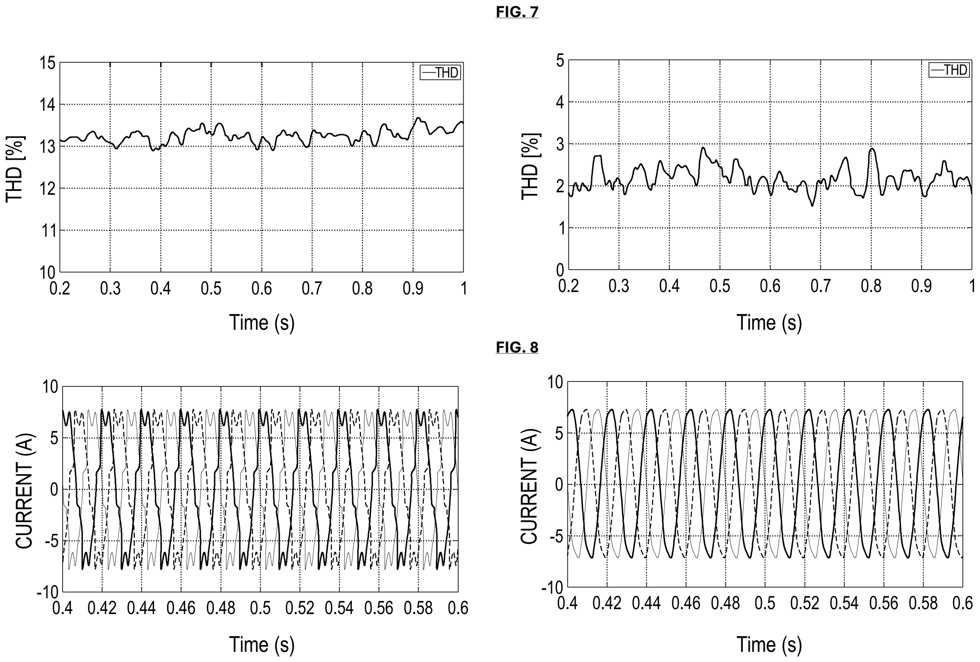

Figure 7 shows the results that this control led to the THD compared to the traditional control.

The waveform of the triad of outlet currents in the two cases always for a power exchanged with the grid of 10% of An is shown in Figure 8.

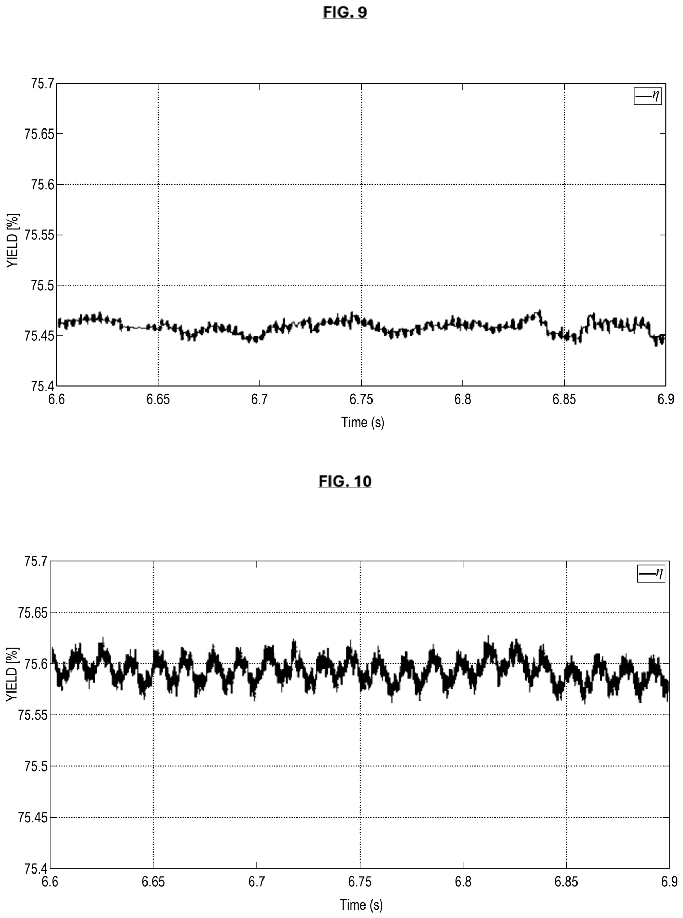

The yields obtained for both controls lead to a negligible difference as can be seen in Figure 9 and 10.

The results obtained highlight a clear improvement in THD for a used power of 10% of An.

For completeness, the results obtained even at higher power levels are also shown.

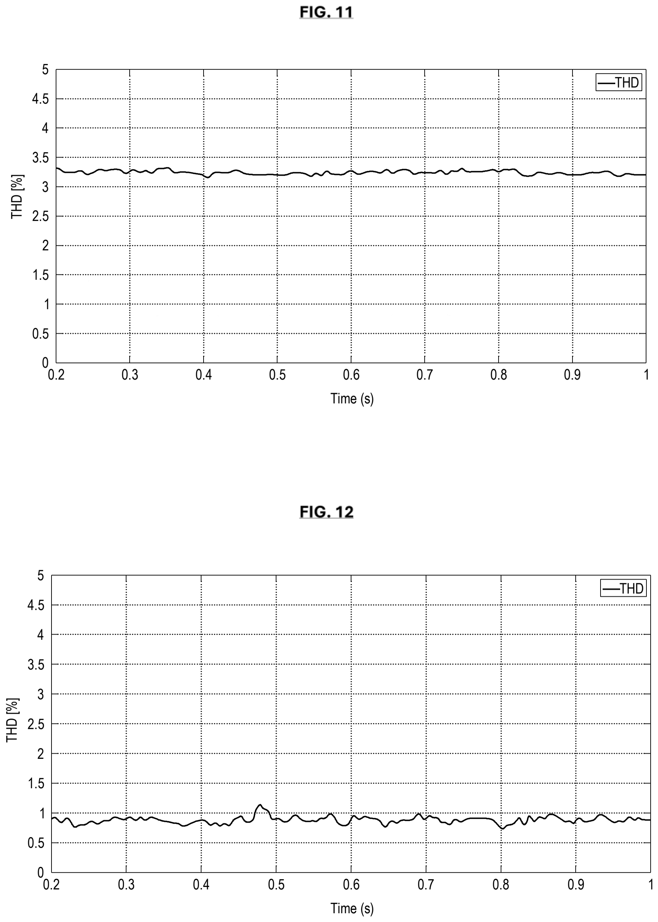

Figure 11 and 12 show the THD for a power level used equal to 30% of An.

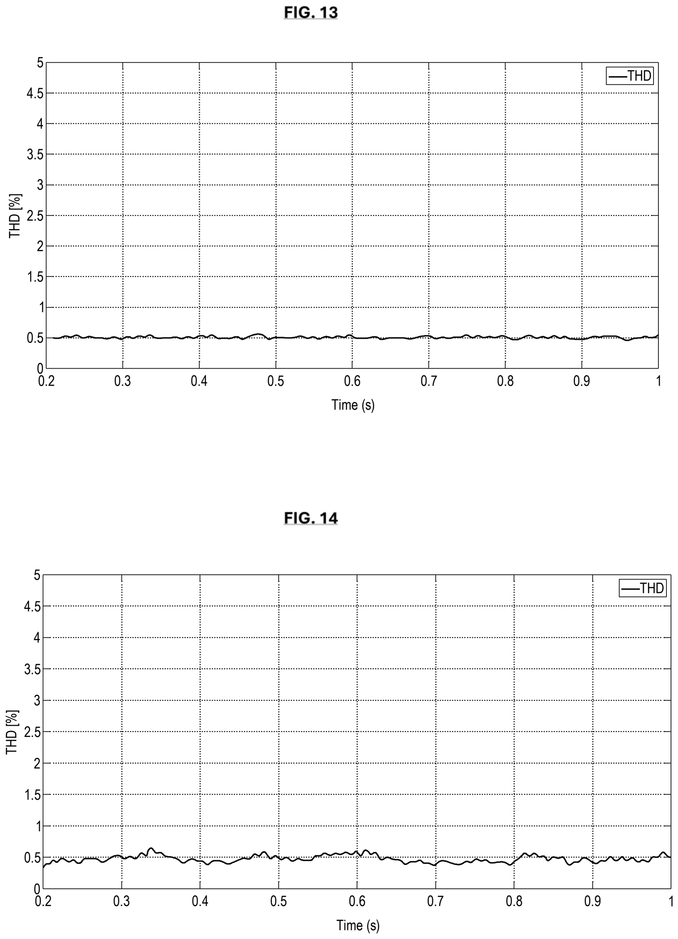

Also in this case, the proposed control allows to obtain an improvement of the THD, however the difference with respect to the case at 10% of An is smaller. All the results show an improvement made by the proposed control up to the simulated case with a power exchanged with the grid equal to 83% of An shown for the two cases in Figures 13 and 14 where the advantages brought by the proposed control become null.

Figure 15, finally, shows a table of parameter values used in such experimental conditions.

Finally, it is pointed out that the present invention is applicable in various fields of application such as also in the field of control of the motors. In particular, in accordance with the invention, a control is possible for any application in general.

**Claims**

**1.** A current source multilevel converter comprising:

- At least two sub-modules;
- **Characterized by the fact that:**

    - A control configured to perform a power exchange between said at least two sub-modules is comprised in such a way that a quantity of power supplied by a sub-module is absorbed by the other sub-module in such a way that the power required by the grid and exchanged with said grid remains unchanged.

2. The converter, according to claim 1, wherein

    - said control is a control of the modulation index (ma);
    - And wherein the control of the modulation index is arranged to receive a reference modulation index in inlet, which is the modulation index which one wishes to obtain, and the present modulation index in such a way that the control of the modulation index provides the reference reactive current "$i_{q,ref}$" in outlet which is used as positive for a sub-module, which will supply a power, and negative for the other sub-module which will consequently absorb a power in such a way that with the same modulation index that must remain very close to the unit value, in the event of a decrease in the power exchanged with the outside, the control will compensate for the power passing in the sub-modules through said reactive power exchange.

3. The converter, according to claim 1 or 2, wherein said at least two sub-modules are placed in parallel to each other, each sub-module being powered by its own independent current source.

4. The converter, according to one or more of the preceding claims, wherein said control is a control of the modulation index and is programmed to consider as a reference a modulation index defined as the sum of the direct axis current $i_{gd,ref}$ and the reference quadrature axis current $i_{gq,ref}$, normalized at the nominal current in accordance with the following formula:

$$m_a = \frac{\sqrt{i_{gd,ref}^2 + i_{gq,ref}^2}}{I_{dc}}$$

5. The converter, according to claim 4, wherein the control of the modulation index is arranged to receive a reference modulation index in inlet, which is the modulation index which one wishes to obtain, and the present modulation index in such a way that the control of the modulation index provides the reactive current "$i_{q,ref}$" in outlet which is used as positive for a sub-module, which will supply a reactive power, and negative for the other sub-module which will consequently absorb a reactive power.

6. The converter, according to one or more of the preceding claims, wherein there is a control PI(z) which is programmed to take in inlet the difference of the modulation index between the reference one and the present one and provide the reactive current required to obtain the reference modulation index at the present power exchanged with the outside.

7. The converter, according to one or more of the preceding claims, wherein for each sub-module one or more MOSFET devices are comprised in series with one or more diodes in such a way as to block inverted tensions.

8. The converter, according to one or more of the preceding claims, wherein, further, downstream of the connection node of said at least two sub-modules, a three-phase capacitive filter is connected adapted to eliminate the high-frequency components of currents.

9. The converter, according to one or more of the preceding claims, wherein the converter is three-phase.

10. A method for obtaining a reduction of unwanted harmonics in a current converter when it is operating in power ranges reduced with respect to the nominal power, the method comprising arrangement in the converter of at least two sub-modules, the method comprising a step of power exchange between said at least two sub-modules in such a way that a quantity of power supplied by said at least a sub-module is absorbed by the other sub-module or vice versa, in such a way that the power required by the grid and exchanged with said grid remains unchanged.

11. The method, according to claim 10, wherein, in order to control the power supplied by the converter, a modulation index $m_a$ is taken as a reference, said modulation index receiving in inlet a reference modulation index, which is the modulation index which one wants to obtain, and a present modulation index, said control providing in outlet the reference reactive current "$i_{q,ref}$" which is used as positive for a sub-module, which will supply a reactive power, and negative for the other sub-module which will consequently absorb a reactive power.

12. The method, according to claim 10 or 11, wherein said at least two sub-modules are placed in parallel to each other, each sub-module being powered by its own independent current source.

13. The method, according to claim 12, wherein in order to control the power supplied by the converter, the modulation index $m_a$ is taken as a reference defined as the sum of the direct axis current $i_{gd,ref}$ and the reference quadrature axis current $i_{gq,ref}$, normalized at the nominal current in accordance with the present formula:

$$m_a = \frac{\sqrt{i_{gd,ref}^2 + i_{gq,ref}^2}}{I_{dc}}$$

in such a way that, with the same modulation index that must remain close to or equal to the unit value, in the event of a decrease in the power supplied, the control compensates for the power passing in the sub-modules through a reactive power exchange.

14. The method, according to one or more of the preceding claims, wherein said control is a control of the modulation index which receives in inlet a reference modulation index, which is the modulation index which one wants to obtain, and a present modulation index, said control providing in outlet the reactive current "$i_{q,ref}$" which is used as positive for a sub-module, which will supply a reactive power, and negative for the other sub-module which will consequently absorb a reactive power.

**FIG. 1**

**(Prior art)**

**FIG. 2**

FIG. 3

**FIG. 3A**

i_d,ref1 — 1
i_d1 — 2
i_q,ref1 — 3
i_q1 — 4

PI(s) / Controller PI 1

PI(s)

0

v_q — 5

v_q — 1
PLL1

i_d,ref2 — 6
i_d2 — 7
i_q,ref2 — 8
i_q2 — 9

PI(s) / Controller PI 2

PI(s)

0

dq0 / abc
$\Theta_{alac}$
Inverse Park Transform 1
i_abc

1/Idc

Carrier signal with initial phase = 0°

Modulation control sub-module one

1 — Gate signal sub-module one

dq0 / abc
$\Theta_{alac}$
Inverse Park Transform 2
i_abc

1/Idc

Carrier signal with initial phase = 180°

Modulation control sub-module two

2 — Gate signal sub-module two

## FIG. 4

## FIG. 5

## FIG. 6

FIG. 7

FIG. 8

EP 4 761 092 A1

**FIG. 9**

**FIG. 10**

FIG. 11

FIG. 12

**FIG. 13**

**FIG. 14**

17

## FIG. 15

| Parameters | Symbol (unit) | Value |
|---|---|---|
| Nominal power of the converter | $A_n$ (kVA) | 30 |
| Number of sub-modules | $N_{sm}$ (-) | 2 |
| DC side current | $I_{dc}$ (A) | 30.62 |
| Switching frequency | $f_s$ (kHz) | 30 |
| Grid nominal voltage | $V_n$ (V) | 400 |
| Grid frequency | $f_n$ (Hz) | 50 |
| Grid nominal current (RMS) | $I_n$ (A) | 43.3 |
| Short-circuit ratio | SCR (-) | 3 |
| Grid X/R ratio | $X/R$ (-) | 2 |
| Grid impedance | $Z_g$ ($\Omega$) | 1.77 |
| Grid reactance | $X_g$ ($\Omega$) | 1.59 |
| Grid resistance | $R_g$ ($\Omega$) | 0.795 |
| Nominal power of the transformer | $A_{tr}$ (kVA) | 30 |
| Nominal current of the transformer | $I_{tr}$ (A) | 43.3 |
| Yield of the transformer | $\eta$ (-) | 0.98 |
| Series resistance of the transformer | $R_{ts}$ ($\Omega$) | 0.107 |
| Reactance of the transformer | $X_{ts}$ ($\Omega$) | 0.302 |
| Required theoretical capacity of filter | $C_f$ ($\mu F$) | 46.73 |
| Internal resistance of the filter capacitor | $R_c$ ($m\Omega$) | 3 |

## FIG. 16

Europäisches
Patentamt

European
Patent Office

Office européen
des brevets

# EUROPEAN SEARCH REPORT

**Application Number**

EP 25 21 7794

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIANG JIAQI ET AL: "Current source modular multilevel converter for HVDC and FACTS", 2013 15TH EUROPEAN CONFERENCE ON POWER ELECTRONICS AND APPLICATIONS (EPE) IEEE, 2 September 2013 (2013-09-02), pages 1-10, XP032505583, DOI: 10.1109/EPE.2013.6634735 [retrieved on 2013-10-16] | 1,10 | INV. H02M7/483 H02M1/12 H02M1/10 H02M1/00 |
| A | * page 3 - page 5; figures 3, 4 * ----- | 2-9, 11-14 | |
| X | CN 111 277 152 A (ELECTRICITE DE FRANCE) 12 June 2020 (2020-06-12) * paragraph [0146] - paragraphs [0149], [0389]; figures 3, 4, 6a, 6b,7 * ----- | 1-14 | |
| A | FR 3 059 855 A1 (INST SUPERGRID [FR]) 8 June 2018 (2018-06-08) * page 4 - page 5; figures 3, 4 * ----- | 1-14 | |
| A | BADAWI SARAH ET AL: "A New Reduced Switch-Count Configuration for Regenerative Cascaded H-Bridge Converter", 2020 IEEE ENERGY CONVERSION CONGRESS AND EXPOSITION (ECCE), IEEE, 11 October 2020 (2020-10-11), pages 4970-4975, XP033850578, DOI: 10.1109/ECCE44975.2020.9235458 * page 6; figure 7 * ----- -/-- | 1-14 | TECHNICAL FIELDS SEARCHED (IPC) H02M |

The present search report has been drawn up for all claims

| Place of search | Date of completion of the search | Examiner |
|---|---|---|
| The Hague | 27 February 2026 | Zeljkovic, Sandra |

EPO FORM 1503 03.82 (P04C01)

Europäisches
Patentamt

European
Patent Office

Office européen
des brevets

**EUROPEAN SEARCH REPORT**

Application Number

EP 25 21 7794

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MELIN P E ET AL: "Concepts of a Control Strategy for Multilevel CSC STATCOM toward Reduce its Losses using a Fixed Modulation Index",<br>IECON 2019 - 45TH ANNUAL CONFERENCE OF THE IEEE INDUSTRIAL ELECTRONICS SOCIETY, IEEE, vol. 1, 14 October 2019 (2019-10-14), pages 7051-7056, XP033669647,<br>DOI: 10.1109/IECON.2019.8926807<br>* abstract *<br>* figure 1 *<br><br>----- | 1-14 | |
| A | ALSKRAN FALEH ET AL: "Multilevel Current Source Converter-Based STATCOM Suitable for Medium-Voltage Applications",<br>IEEE TRANSACTIONS ON POWER DELIVERY, IEEE SERVICE CENTER, NEW YORK, NY, US, vol. 36, no. 2, 23 June 2020 (2020-06-23), pages 1222-1232, XP011845150,<br>ISSN: 0885-8977, DOI:<br>10.1109/TPWRD.2020.3004419<br>[retrieved on 2021-03-23]<br>* abstract *<br>* figure 1 *<br><br>----- | 1-14 | TECHNICAL FIELDS SEARCHED (IPC) |

The present search report has been drawn up for all claims

| Place of search | Date of completion of the search | Examiner |
|---|---|---|
| The Hague | 27 February 2026 | Zeljkovic, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 7794

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2026

| Patent document cited in search report | | Publication date | Patent family member(s) | | Publication date |
|---|---|---|---|---|---|
| CN 111277152 | A | 12-06-2020 | CN | 111277152 A | 12-06-2020 |
| | | | FR | 3089361 A1 | 05-06-2020 |
| FR 3059855 | A1 | 08-06-2018 | EP | 3549248 A1 | 09-10-2019 |
| | | | FR | 3059855 A1 | 08-06-2018 |
| | | | WO | 2018100322 A1 | 07-06-2018 |

EPO FORM P0459

For more details about this annex : see Official Journal of the European Patent Office, No. 12/82